Europäisches Patentamt

European Patent Office

Office européen des brevets

(11) Veröffentlichungsnummer: **0 244 861 B1**

(12) **EUROPÄISCHE PATENTSCHRIFT**

(45) Veröffentlichungstag der Patentschrift:
**07.06.89**

(21) Anmeldenummer: **87106625.4**

(22) Anmeldetag: **14.02.84**

(60) Veröffentlichungsnummer der früheren Anmeldung
nach Art. 76 EPÜ: **0120261**

(51) Int. Cl.⁴: **B60S 1/38**

(54) Wischvorrichtung für Scheiben von Kraftfahrzeugen.

(30) Priorität: **19.03.83 DE 3309972**

(43) Veröffentlichungstag der Anmeldung:
**11.11.87 Patentblatt 87/46**

(45) Bekanntmachung des Hinweises auf die Patenterteilung:
**07.06.89 Patentblatt 89/23**

(84) Benannte Vertragsstaaten:
**BE DE FR IT**

(56) Entgegenhaltungen:
**DE-A-1 430 589**
**DE-A- 2 346 100**
**DE-U- 7 826 802**
**FR-A- 1 237 303**

(73) Patentinhaber: **ROBERT BOSCH GMBH, Postfach 50,
D-7000 Stuttgart 1(DE)**

(72) Erfinder: **Brümmer, Dietmar, Hindenburgstrasse 35,
D-7582 Bühlertal(DE)**
Erfinder: **Gartner, Gerhard, Dipl.-Ing. (FH),
Hans-Thoma-Strasse 12, D-7573 Sinzheim(DE)**
Erfinder: **Lorenz, Karl-Heinz, Dalbergstrasse 5,
D-7570 Baden-Baden 23(DE)**
Erfinder: **Weiler, Paul, Brandrain 27,
D-7594 Kappelrodeck(DE)**

**Beschreibung**

Stand der Technik

Die Erfindung geht aus von einer Wischvorrichtung nach der Gattung des Hauptanspruchs. Bei einer derartigen, bekannten Wischvorrichtung (DE-U 78 26 802) befindet sich die vom Fahrtwind beaufschlagte Blendenfläche oberhalb des Wischerarms und somit in einem erheblichen Abstand von der Scheibe. Dieser Abstand verändert sich während der Pendelbewegung ständig, weil der Wischerarm um eine ortsfeste Pendelachse schwenkt, und sich deshalb die Neigung einer zur Wischvorrichtung gehörenden Wischleiste zur gekrümmten Scheibenoberfläche ebenfalls einer steten Veränderung unterworfen ist.

Bei einer anderen, bekannten Wischvorrichtung (DE-A 23 46 100) ist zwar die am Wischblatt befestigte Blende bis nahe an die Scheibe herangeführt, doch bleibt dieser Zustand nur bei einer ebenen Scheibe über den gesamten Pendelwinkel gleich. Beim Wischen von gekrümmten Scheiben mit dieser Wischvorrichtung treten die oben geschilderten Mängel in gleichem Maße auf.

Je größer aber der Spalt zwischen der äußeren Scheibenoberfläche und der dieser zugewandten Blendenkante ist, um so stärker treten insbesondere bei hoher Fahrtgeschwindigkeit die unerwünschten Abhebeerscheinungen auf, welche bei bestimmten Witterungsbedingungen in hohem Maße gefährlich sind.

Vorteile der Erfindung

Die erfindungsgemäße Wischvorrichtung mit den kennzeichnenden Merkmalen des Hauptanspruchs hat demgegenüber den Vorteil, daß in jeder Pendelumkehrstellung ein dem Verlauf der Scheibenoberfläche angepaßter Längsabschnitt der Blende vorhanden ist, der eng an die Scheibenkrümmung angepaßt werden kann. Eine ausreichende Anpassung der Blendenkante an die zwischen den Umkehrstellungen befindlichen Scheibenbereiche ergibt sich dann zwangsläufig.

Somit befindet sich das Wischblatt auf der vom Fahrtwind abgewandten Seite der Blende stets in einer Unterdruckzone, in welcher keine Abhebetendenzen wirksam werden können.

Durch die in den Unteransprüchen aufgeführten Maßnahmen sind vorteilhafte Weiterbildungen und Verbesserungen der im Hauptanspruch angegebenen Wischvorrichtung möglich.

Zeichnung

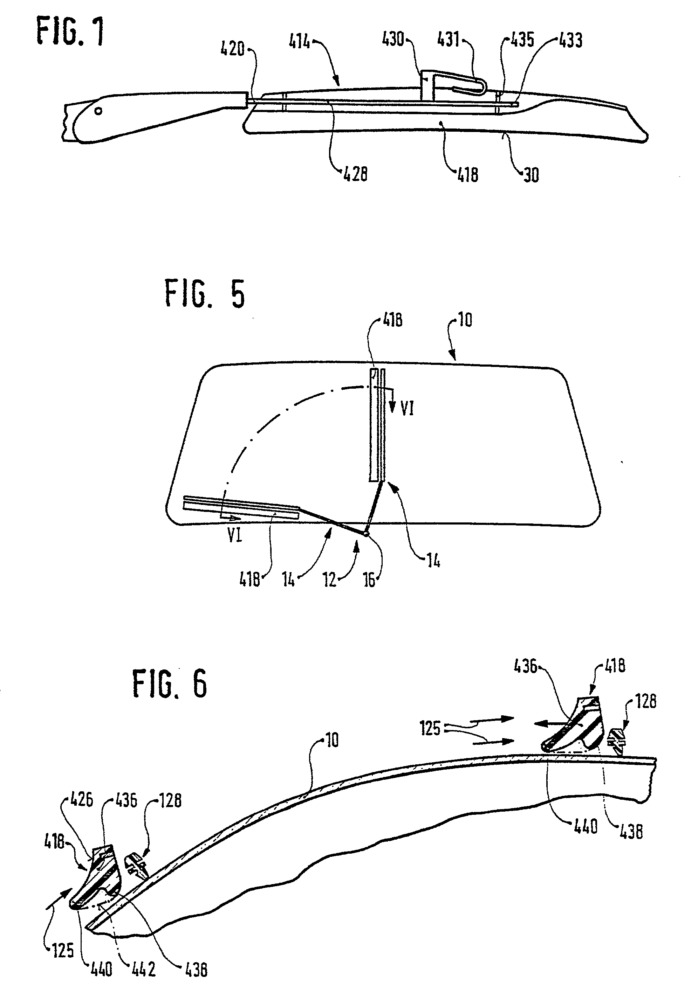

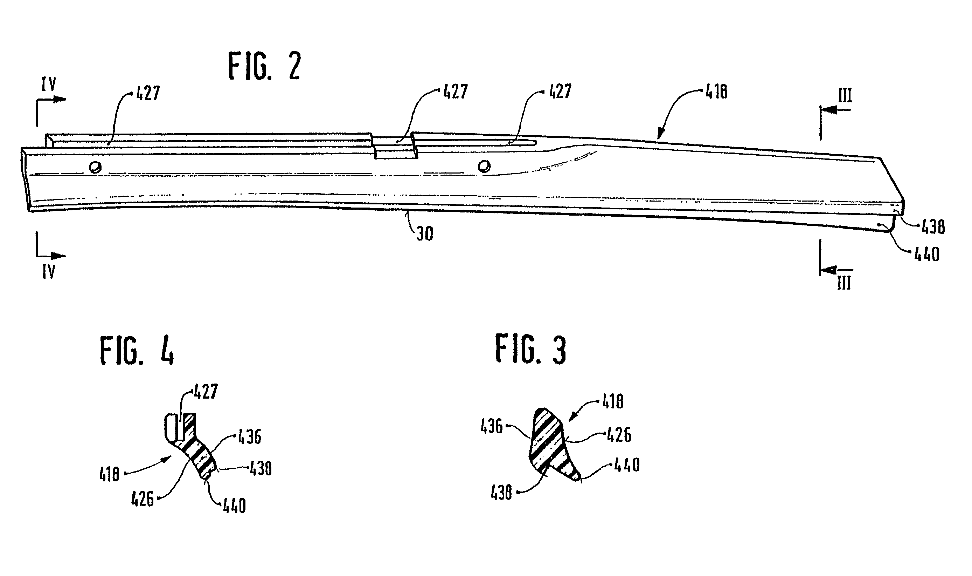

Ein Ausführungsbeispiel der Erfindung ist in der Zeichnung dargestellt und in der nachfolgenden Beschreibung näher erläutert. Es zeigen Figur 1 eine Rückansicht eines Wischerarms mit an diesem angeordneter Blende, wobei beide Bauteile gemäß der Erfindung ausgebildet sind. Figur 2 eine perspektivische Ansicht der Blende gemäß Figur 1, Figur 3 die Schnittfläche eines Schnitts durch die Blende gemäß Figur 2, entlang der Linie III-III, Figur 4 die Schnittfläche eines Schnitts durch die Blende gemäß Figur 2, entlang der Linie IV-IV, Figur 5 eine schematische, verkleinerte Darstellung der Wischvorrichtung aus der Sicht aus dem Kraftfahrzeug, wobei ein pendelnd angetriebener Wischhebel in seinen beiden Umkehrlagen gezeigt ist und Figur 6 die Schnittflächen der Scheibe, der Blende und der Wischleiste entlang der Linie V-V in Figur 5, bei beiden Unkehrstellungen in vergrößerter Darstellung.

Beschreibung des Ausführungsbeispiels

Aus Figur 5 ist eine Windschutzscheibe 10 eines Kraftfahrzeugs mit einer außen angeordneten Wischvorrichtung 12 so ersichtlich, wie sie der Fahrer des Kraftfahrzeuges sieht. Der Einfachheit halber ist die Wischvorrichtung 12 nur anhand eines Wischhebels 14 dargestellt, der an einer Wischwelle 16 befestigt ist, welche eine Pendelachse für den Wischhebel 14 bildet. Der Wischhebel 14 ist in seinen beiden Umkehrlagen gezeichnet, von denen die zur Unterkante der Scheibe annähernd parallele Umkehrstellung gleichzeitig die sogenannte Ablagestellung bildet, in welcher der Wischhebel bei abgeschalteter Wischvorrichtung abgelegt wird. An dem Wischhebel 14 ist eine Blende 418 befestigt.

Bei der Ausführungsform gemäß den Figuren 1 bis 4 ist die Blende 418 als separates Bauteil einstückig ausgebildet. Sie ist aus Kunststoff gefertigt und weist einen Querschnitt auf, den insbesondere die Figuren 3 bis 4 zeigen. Die Blende 418 ist leistenförmig und verjüngt sich zu ihrem der Wischerwelle 16 zugewandten Ende. Weiter weist sie eine Aussparung 427 auf, in welcher ein stangenförmiges Teil 428 des Wischerarms 420 einsetzbar ist (Figur 1). Der Wischerarm 420 hat in einem mittleren Abschnitt einen sich von der Scheibe weg erstreckenden Lappen 430, an welchen der Anschlußhaken 431 für ein nicht dargestelltes Wischblatt angeformt ist. Damit eine einwandfreie Befestigung der Blende 418 an dem stangenförmigen Teil 428 gewährleistet ist, erstreckt sich dieses mit einer Verlängerung 433 über den Lappen 430 hinaus. Befestigungsmittel 435, die als Paßstifte Klemmschraube oder dergleichen ausgebildet sein können, halten die Blende 418 in ihrer vorschriftsmäßigen Lage am Wischerarm 420. Die Blende 418 hat einen leistenförmigen Grundkörper 436, der mit zwei Vorsprüngen 438 und 440 versehen ist (siehe insbesondere Figuren 3 und 4). Weiter weist die Blende 418 eine Anströmwand 426 auf, die der Windströmungsrichtung 125 (Figur 6) zugewandt ist. Die Anordnung der beiden Vorsprünge 438 und 440 ist so getroffen, daß sich der Vorsprung 440 nahe der zu wischenden Scheibe 10 befindet, wenn der Wischhebel 16 sich in seiner im wesentlichen senkrechten Umkehrlage befindet. Diese Umkehrlage ist insbesondere aus Figur 5 ersichtlich. In der anderen Umkehrlage (Ablagestellung) befindet sich der Vorsprung 438 nahe der zu wischenden Scheibe. Diese Relativbewegung zwischen der Blende 418 und der dieser zugewandten Scheibenoberfläche kommt dadurch zustande, daß die Scheibe sphärisch gekrümmt ist.

Weiter zeigt Figur 6 besonders deutlich, daß die Wischleiste 128 in beiden Umkehrlagen nicht direkt von dem Fahrtwind (Anströmungsrichtung 125) beaufschlagt werden kann. Die Wischleiste 128 befindet sich also im wesentlichen im Windschatten der Blende 418. Wie in Figur 6 strichpunktiert angedeutet ist, können aber auch die Vorsprünge 438 und 440 in den Grundkörper 436 die Blende 418 einbezogen werden. Durch entsprechende Ausbildung der Oberfläche 442 kann erreicht werden, daß die Belnde 418 in sämtlichen Zwischenstellungen zwischen den beiden Umkehrstellungen bis nahe an die zu wischende Scheibe 10 heranreicht.

Wie insbesondere die Figuren 1 und 2 zeigen, ist die der Scheibe 10 zugewandte Seite 30 der Blende 418 annähernd der Scheibenkrümmung angepaßt. Diese Seite 30 reicht in allen Fällen bis nahe an die Scheibe 10 heran. Die der Windströmung 125 zugewandte Anströmwand 426 ist konkav ausgebildet.

**Patentansprüche**

1. Wischvorrichtung für sphärisch gekrümmte Scheiben von Kraftfahrzeugen, mit einem pendelnd angetriebenen Wischerarm (420), an dem ein auf der Scheibe (10) angelegtes Wischblatt und eine vom Fahrtwind beaufschlagte Blende (418) angeordnet sind, dadurch gekennzeichnet, daß sich die Blende (418) bis nahe an die Scheibe (10) erstreckt und daß die der Scheibe zugewandte Seite der Blende (418) so geformt ist, daß sie zumindest in beiden Pendelumkehrstellungen des Wischerarms (420) einen nahe der Scheibe (10) befindlichen Längsabschnitt (438, 440) hat.

2. Wischvorrichtung nach Anspruch 1, dadurch gekennzeichnet, daß der Längsabschnitt durch zwei vorzugsweise zur Pendelachse (16) konvergierende, leistenförmige Vorsprünge (438 bzw. 44) gebildet ist, von denen sich der eine Vorsprung (438) in der einen Pendelumkehrlage (Ablagestellung) und der andere Vorsprung (440) in der anderen Pendelumkehrlage nahe der Scheibe (10) befinden.

3. Wischvorrichtung nach einem der Ansprüche 1 oder 2, dadurch gekennzeichnet, daß die der Scheibe (10) zugewandte Seite der Blende (118, 218, 318, 418) wenigstens annähernd der Scheibenkrümmung angepaßt ist.

4. Wischvorrichtung nach einem der Ansprüche 1 bis 3, dadurch gekennzeichnet, daß die Blende (418) an den Wischerarm (420) angeformt, vorzugsweise einstückig mit diesen verbunden ist.

5. Wischvorrichtung nach einem der Ansprüche 1 bis 3, dadurch gekennzeichnet, daß die am Wischerarm (420 bzw. 320) angeordnete Blende (418 bzw. 319) an ihrem von der Scheibe (10) abgewandten Bereich eine Ausnehmung (427) zum Einsetzen eines Wischerarmabschnitts aufweist.

6. Wischvorrichtung nach einem der Ansprüche 1 bis 5, dadurch gekennzeichnet, daß die der Windströmung (125) zugewandte Seite (126, 226, 426) der Blende (118, 218, 318, 418) konkav ausgebildet ist.

7. Wischvorrichtung nach einem der Ansprüche 1 bis 6, wobei das Wischblatt einen Druckverteilungsbügel aufweist und an dem Druckverteilungsbügel wenigstens ein die Wischleiste fassender Zwischenbügel angeordnet ist, dadurch gekennzeichnet, daß in Strömungsrichtung (125) gesehen die Blende (118, 218, 318, 418) zumindest wesentliche Bereiche des Zwischenbügels (128) abdeckt, in dem sie zur Scheibe (10) hin divergiert.

8. Wischvorrichtung nach einem der Ansprüche 1 bis 7, bei der der Wischhebel eine Pendelbewegung von mehr als 90° ausführt, dadurch gekennzeichnet, daß die Wischleiste (128) zwischen zwei im wesentlichen spiegelbildlich angeordneten Blenden (118, 218, 318, 418) angeordnet ist.

**Claims**

1. Wiping device for spherically curved screens of motor vehicles, having a wiper arm (420) which is driven to oscillate and on which is arranged a wiper blade applied to the screen (10) and a deflector (418) subjected to the relative wind, characterized in that the deflector (418) extends right into the vicinity of the screen (10) and in that that side of the deflector (418) which faces the screen is shaped in such a way that it has a longitudinal portion (438, 440) near to the screen (10) at least in both oscillation reversal positions of the wiper arm (420).

2. Wiping device according to Claim 1, characterized in that the longitudinal portion is formed by two strip-shaped projections (438 and 440) which preferably converge towards the axis (16) of oscillation and of which one projection (438) is near to the screen (10) in one oscillation reversal position (rest position) and the other projection (440) is near to the screen (10) in the other oscillation reversal position.

3. Wiping device according to either of Claims 1 or 2, characterized in that that side of the deflector (118, 218, 318, 418) which faces the screen (10) is at least approximately matched to the curvature of the screen.

4. Wiping device according to one of Claims 1 to 3, characterized in that the deflector (418) is moulded on to the wiper arm (420) and is preferably integrally joined to the latter.

5. Wiping device according to one of Claims 1 to 3, characterized in that, at its region facing away from the screen (10), the deflector (418 or 319) arranged on the wiper arm (420 or 320) has a recess (427) for the insertion of a wiper arm portion.

6. Wiping device according to one of Claims 1 to 5, characterized in that that side (126, 226, 426) of the deflector (118, 218, 318, 418) which faces the air flow (125) is of concave design.

7. Wiping device according to one of Claims 1 to 6, the wiper blade having a pressure distribution frame and there being arranged on the pressure distribution frame at least one intermediate frame gripping the wiping strip, characterized in that, as seen in the direction (125) of flow, the deflector (118, 218, 318, 418) covers at least substantial areas of the intermediate frame (128) by diverging towards the screen (10).

8. Wiping device according to one of Claims 1 to 7, in which the wiping lever executes an oscillatory movement of more than 90°, characterized in that the wiping strip (128) is arranged between two deflectors (118, 218, 318, 418) arranged essentially mirror-image-fashion.

## Revendications

1. Essuie-glace pour vitre de véhicule automobile bombée de façon sphérique avec un bras d'essuie-glace (420) entraîné de façon oscillante, sur lequel sont disposés un balai d'essuie-glace s'appuyant sur la vitre (10) et un écran (418) soumis au vent relatif, caractérisé en ce que cet écran (418) s'étend jusqu'au voisinage de la vitre (10) et en ce que le côté de l'écran (418) faisant face à la vitre est formé de telle sorte qu'il possède au moins aux deux positions d'oscillation extrêmes du bras d'essuie-glace une section longitudinale (438, 440) se trouvant au voisinage de la vitre (10).

2. Essuie-glace selon la revendication 1, caractérisé en ce que la section longitudinale est formée de deux saillies (438, et 440) en forme de tringles convergeant avantageusement vers l'axe d'oscillation (16), dont l'une des saillies (438) se trouve à l'un des points d'inversion du mouvement (point fixe) et dont l'autre saillie (440) se trouve à l'autre point d'inversion du mouvement au voisinage de la vitre (10).

3. Essuie-glace selon l'une des revendications 1 ou 2, cractérisé en ce que le côté de l'écran (118, 218, 318, 418) faisant face à la vitre (10) s'adapte au moins de façon approximative au bombé de la vitre.

4. Essuie-glace selon l'une des revendications 1 à 3, caractérisé en ce que l'écran (418) est adapté sur le bras d'essuie-glace (420) et relié à celui-ci avantageusement de façon monobloc.

5. Essuie-glace selon l'une des revendications 1 à 3, caractérisé en ce que l'écran (418 et 319) associé au bras d'essuie-glace (420 et 430) comporte dans sa zone faisant face à la vitre (10) une cavité (427) destinée à recevoir la section de bras d'essuie-glace.

6. Essuie-glace selon l'une des revendications 1 à 5, caractérisé en ce que le côté faisant face à l'écoulement du vent (125) de l'écran (118, 218, 318, 418) est de forme concave.

7. Essuie-glace selon l'une des revendications 1 à 6, où le balai d'essuie-glace comporte un archet de répartition de pression et sur ce dernier est placé au moins un archet intermédiaire saisissant la tringle d'essuie-glace, caractérisé en ce que l'écran (118, 218, 318, 418) vu dans le sens de l'écoulement recouvre au moins pour l'essentiel la zone de l'archet intermédiaire (128) dans laquelle il diverge par rapport à la vitre (10).

8. Essuie-glace selon l'une des revendications 1 à 7, dans lequel le levier d'essuie-glace effectue un mouvement oscillant de plus de 90°, caractérisé en ce que la tringle d'essuie-glace (128) est disposée entre deux écrans (118, 218, 318, 418) placés pour l'essentiel selon une symétrie spéculaire.

FIG. 1

FIG. 5

FIG. 6

# FIG. 2

427   427   427   418

IV   IV

III   III

30

438

440

# FIG. 4

427

418

426

436

438

440

# FIG. 3

436

418

426

438

440

EP 0 244 861 B1